# EUROPEAN PATENT SPECIFICATION

(11) **EP 3 771 815 B1**
(45) Date of publication and mention of the grant of the patent: **01.10.2025**
(21) Application number: 20188800.5
(22) Date of filing: 31.07.2020
(51) Int. Cl.: F02D 41/32, F02D 41/02, F02D 17/02, F02D 41/00, F02D 41/14

(54) **METHOD FOR CONTROLLING A HEAT ENGINE OF A SADDLE-RIDE TYPE VEHICLE**
VERFAHREN ZUR STEUERUNG EINER WÄRMEKRAFTMASCHINE EINES SATTEL-FAHRZEUGS
PROCÉDÉ DE CONTRÔLE D'UN MOTEUR THERMIQUE DE VÉHICULE À SELLE

(30) Priority: 31.07.2019 IT 201900013476
(43) Date of publication of application: 03.02.2021
(73) Proprietor: Piaggio & C. S.P.A., 56025 Pontedera Pisa (IT)
(72) Inventor: LEARDINI, Walther, 56025 Pontedera (IT); MAGHERINI, Adriano, 56025 Pontedera (IT)
(74) Representative: Savi, Massimiliano

(56) References cited:
- EP-A1- 3 184 777
- FR-A1- 3 051 227
- JP-B2- 3 252 197
- JP-B2- 3 888 054
- US-B1- 7 886 523

## Description

### FIELD OF THE INVENTION

The present invention relates to the scope of the construction of saddle-ride type vehicles, meaning, in general, a moped or motorcycle with two, three or four wheels, intended primarily for the transport of people. In particular, the present invention relates to a method for controlling an engine of a saddle-ride type vehicle intended to reduce hydrocarbon emissions during the warm-up phase of the engine.

### PRIOR ART

In recent years, policies aimed at reducing air pollution have led to increasingly stringent regulations on exhaust emissions of pollutants generated by heat engine vehicles. Such regulations also apply to saddle-ride type vehicles to which the present invention relates.

It is known that combustion gases comprise several compounds, such as unburnt hydrocarbons, nitrogen compounds, carbon monoxide, water. An exhaust gas treatment assembly is provided into which the combustion products are conveyed through appropriate manifolds to reduce the percentage of pollutants released into the atmosphere (in particular NOx and HC). Typically, the treatment assembly comprises at least one main catalyzer into which the pollutants are trapped. The catalyzer is usually placed inside the silencer (muffler) which is located, as known, at the end of the exhaust line. The main catalyzer is of considerable size because its configuration must ensure that pollutants are removed even when the engine is running at the maximum performance or when exhaust gas production is at its maximum. At the same time, its mass must be such to maintain a sufficient catalysis temperature level even when the engine is operated at low load (low rpm).

Due to its size, the catalyzer cannot be installed in a position close to the heat engine and, therefore, requires a relatively long time to reach the correct operating temperature, this indicating a minimum temperature level that allows effective catalysis of pollutant substances.

To reduce emissions even in *"cold engine"* conditions (i.e. when the main catalyzer has not yet reached operating temperature), it is known to install a second catalyzer, hereinafter referred to as pre-catalyzer, between the exhaust of the engine combustion chamber and the main catalyzer. Typically, the pre-catalyzer has a volume, and thus a footprint, markedly smaller than that of the main catalyzer and can thus be installed at the exhaust of the combustion chamber. In this manner, the higher-temperature exhaust gases pass through the pre-catalyzer and quickly activate the catalytic reaction. When the engine is cold, the pre-catalyzer therefore compensates for the function of the main catalyzer, which requires a longer time interval to reach the correct efficiency.

As indicated above, regulations require an increasingly stringent reduction in emissions of pollutants, especially hydrocarbons. In other words, the most critical step is undoubtedly the one just after the ignition of the vehicle, i.e. when the main catalyzer has not reached full efficiency. A solution suggested to reduce the heating time of the main catalyzer, and more generally of a catalyzer, is to convey a flow of air inside the catalyzer to trigger an oxidation reaction and cause an increase in the temperature of the catalyzer material. For this purpose, dedicated circuits are provided to convey air into the catalyzer in a controlled manner. Such circuits are thus provided with rather complex mechanical and/or electromechanical adjustment means. However, these represent a critical factor in terms of costs and reliability. In FR 3 051 227 A1, a method for a three-cylinders engine of a vehicle is disclosed wherein, when the temperature of an exhaust device is below a threshold, fuel injection is stopped in one or two cylinders while intake and exhaust valves of the cut cylinders remain operative. At least one cylinder remains operative to provide torque to the vehicle.

The Applicant has thus identified the need for new alternative technical solutions which allow the reduction of pollutant emissions during the warm-up phase of the engine without requiring a change in the configuration of the exhaust gas treatment assembly and without affecting the size, layout and material of the catalyzer and pre-catalyzer.

### SUMMARY OF THE INVENTION

It is the main task of the present invention to provide a saddle-ride type vehicle that makes it possible to respect the standards in terms of pollutant emissions. In the scope of this task, it is a first object of the present invention to provide a control method of an engine of a saddle-ride type vehicle which allows a strong reduction of emissions, especially during the warm-up phase of the engine. It is yet another object of the present invention to provide a control method which does not impact on the structure and materials used for the catalyzers. It is another object to provide a control method which is both reliable and easy to manufacture at competitive costs.

The Applicant found that the task and objects indicated above can be achieved by introducing air into the catalyzer (or pre-catalyzer according to the configuration of the treatment assembly), through no-load cycles of the heat engine, to increase the temperature of the catalyzer rapidly through oxidation reaction. More precisely, the task and objects indicated above are achieved by a control method of a heat engine of a saddle-ride type vehicle wherein the heat engine comprises a single combustion chamber of a mixture generated by fuel injection into an oxidizer flow, an assembly for treating the exhaust gases generated in the chamber, in which the treatment assembly includes at least one catalyzer communicating with said chamber, fuel injection means into an oxidizing air flow; a control unit (ECU) configured to control said injection means, wherein the control method is adapted to be executed by said control unit (ECU) and comprises the steps of:
(A) interrupting the injection of fuel for at least one cycle of said heat engine, wherein said step of interrupting defines a no-load cycle;
B) activating the injection of fuel for a predetermined number (n) of cycles of said engine (10) after said at least one no-load cycle;
C) repeating steps A) and B) until the value of the temperature of said at least one catalyzer increases to reach a predetermined value.

According to a possible embodiment, the method comprises the step of detecting the actual temperature of said at least one catalyzer and of actuating step C) until the actual value of the temperature of said at least one catalyzer reaches said predetermined value.

According to an alternative embodiment, step C) is repeated for a predetermined time interval, at the end of which the expected value of the temperature of said at least one catalyzer reaches said predetermined value, wherein such time interval is established based on a predictive model.

According to a possible embodiment, during the execution of step B, the method provides adjusting/varying the amount of fuel to be injected in the standard cycles immediately after step A to restore the correct carburation in each cycle performed in step B.

### LIST OF FIGURES

Further features and advantages of the method according to the invention will be more apparent from the examination of the following detailed description and to some preferred, but not exclusive embodiments of the saddle-ride type vehicle, illustrated by way of non-limiting example, with reference to the accompanying drawings, in which:
- figure 1 is a diagram of a vehicle according to the present invention;
- figures 2 and 3 are diagrammatic views of an engine and of an exhaust gas treatment assembly according to the present invention;
- figures 4 and 5 are diagrams related to the hydrocarbon emissions generated by tests performed on an engine of a vehicle according to the present invention.

### DETAILED DESCRIPTION

With reference to the aforementioned figures, the present invention thus relates to a method for controlling a heat engine 10 of a saddle-ride type vehicle 1. For the purposes of the present invention, the expression saddle-ride type vehicle means, in general, a moped or motorcycle with two, three or four wheels, intended primarily for the transport of people.

The method is intended to control an engine 10 provided with a single chamber 5 in which the combustion process of a mixture of fuel (gasoline) and oxidizing air takes place. According to a principle known in itself, the mixture is formed as a result of fuel injection, through injection means 47, into an oxidizing air flow. The operation of injection means 47 is preferably adjusted by a control unit (hereinafter referred to as ECU). According to a known solution, the injection means 47 comprise constant section nozzles, the opening of which is controlled by the ECU and wherein the quantity of fuel injected is regulated by varying the opening time of the nozzles.

The engine 10 is provided with a combustion gas treatment assembly 15 which treats the combustion gases which are generated inside the combustion chamber 5. Such assembly 15 comprises an exhaust line 20 along which at least one catalyzer 21, 25 is arranged to convert the polluting substances contained in said combustion gases.

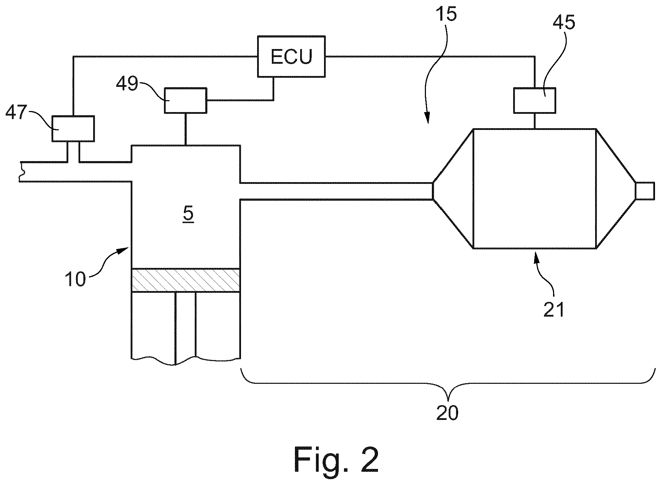

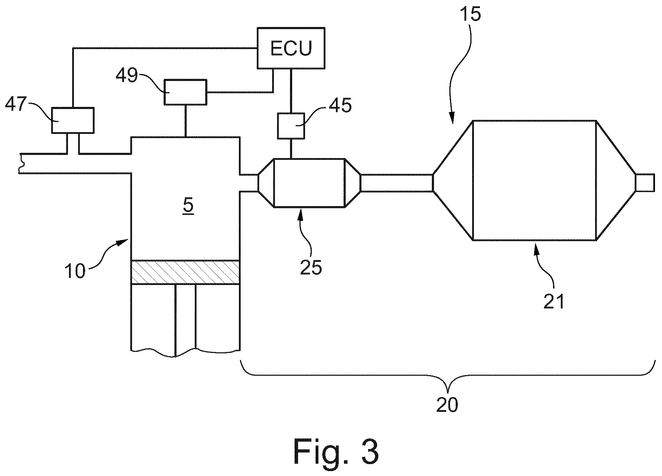

In a possible embodiment diagrammatically illustrated in figure 2, the treatment assembly 15 comprises only one catalyzer 25. In an alternative embodiment, diagrammatically shown in Figure 3, the assembly 15 comprises a main catalyzer 24 and a pre-catalyzer 21 arranged between the main catalyzer 24 and the exhaust of the chamber 5 to be crossed by the exhaust gases generated therein before they reach the main catalyzer 24.

The engine control method 10 according to the invention provides, in a first step (hereinafter referred to as step A) interrupting the fuel injection for at least one cycle of the heat engine. In this manner, the heat engine 10 achieves a no-load cycle, this expression indicating a cycle which takes place with only oxidizing air and thus without the step of combustion. During this at least one no-load cycle, the heat engine 10 does not develop power but, on the contrary, pumps oxidizing air directly to the exhaust and thus directly into the catalyzer provided downstream of the engine exhaust section.

Upon the completion of at least one no-load cycle, the method according to the invention provides the step (hereafter referred to as step B) of activating the fuel injection again to achieve a predetermined number n of standard cycles. The expression *"standard cycle"* indicates a cycle that takes place with the presence of fuel or a cycle during which the engine develops power. Step B is, therefore, implemented in sequence after step A so that the standard cycles n are consecutive and after said at least one no-load cycle.

The method includes at least one third step (hereinafter indicated as step C) which provides repeating step A and step B in sequence until the catalyzer temperature reaches a predetermined value. The latter depends on the characteristics of the catalyzer used and represents a minimum operating temperature value at or above which an effective catalysis reaction of the pollutants is developed.

For the purposes of the present invention, in the execution of step C, the catalyzer to be considered is the first one to be crossed by the exhaust gases exiting from the combustion chamber 5. Therefore, the temperature of the pre-catalyzer 25 is considered in the embodiment of Figure 3.

Step C provides repeating steps A and B in sequence until the actual catalyzer temperature reaches the preset value. In this regard, the actual temperature is detected by means of appropriate sensor means 45. When the temperature value is either greater than or equal to the preset value, the sequence of steps A, B and C is interrupted and the engine runs on standard cycles (i.e. with fuel injection).

According to an alternative embodiment, step C involves repeating steps A and B for a predetermined time interval at the end of which the expected catalyzer temperature 21, 25 is expected to have reached a predetermined value. As described in greater detail below, the duration of the time interval is established based on a predictive model which considers the thermal behavior of the catalyzer under given operating conditions of the engine and following the repetition of steps A and B.

It has been seen that steps A, B and C of the method according to the invention lead to a reduction in hydrocarbon emissions during the warm-up phase of the engine. This is due to the rapid increase in temperature of the catalyzer 21, 25 by effect of the air being pumped in step A. Advantageously, the air is pumped towards the catalyzer by the engine itself (i.e. by the movement of the piston in the chamber) without the addition of circuits and thus mechanical and/or electromechanical parts dedicated to the conveyance of air into the catalyzer, as occurs instead in the known solutions.

As mentioned above, the control method is implemented by the vehicle ECU. As shown in Figures 2 and 3, preferably, the sensor means 45 are electrically connected to the ECU to provide a characteristic signal of the actual temperature of catalyzer 21 or pre-catalyzer 25 according to the configuration of the treatment system 15. The implementation of the method according to the invention can be decided directly by the user or automatically activated by the ECU, e.g. based on the temperature of the heat engine 10. The latter is detected by additional temperature sensors 49 electrically connected to the ECU.

According to an alternative embodiment, already mentioned above, step C) is implemented based on a predictive model of the temperature variation of the pre-catalyzer over a given time interval, starting from an initial temperature of the heat engine and under given operating conditions (load) of the engine itself. This predictive model can be defined by means of a calibration process performed off-vehicle, which provides several tests for each of which the heat engine is actuated under predefined conditions, starting from an initial temperature and implementing the method according to the invention. The thermal behavior, i.e. the temperature variation, of the catalyzer 21, 25 during the test itself is detected for each of the tests. Based on the initial engine temperature and the operating conditions, the ECU determines the duration of the time interval, or the number of times, during which the sequence of steps A, B and C is to be performed, after which the catalyzer 21, 25 will have reached the desired temperature value.

In a preferred embodiment, the number of cycles n is chosen to be a multiple of 8 in step B.

According to a possible embodiment, in the scope of step B, the method provides adjusting/varying the amount of fuel to be injected in the standard cycles immediately following step A to restore the correct carburation in each single standard cycle performed in step B. Indeed, in step A, the fuel simply wets the walls of the intake pipe without taking part in the combustion to achieve the no-load cycle. The share of fuel must, therefore, be re-introduced in the following standard cycles to ensure the correct carburation.

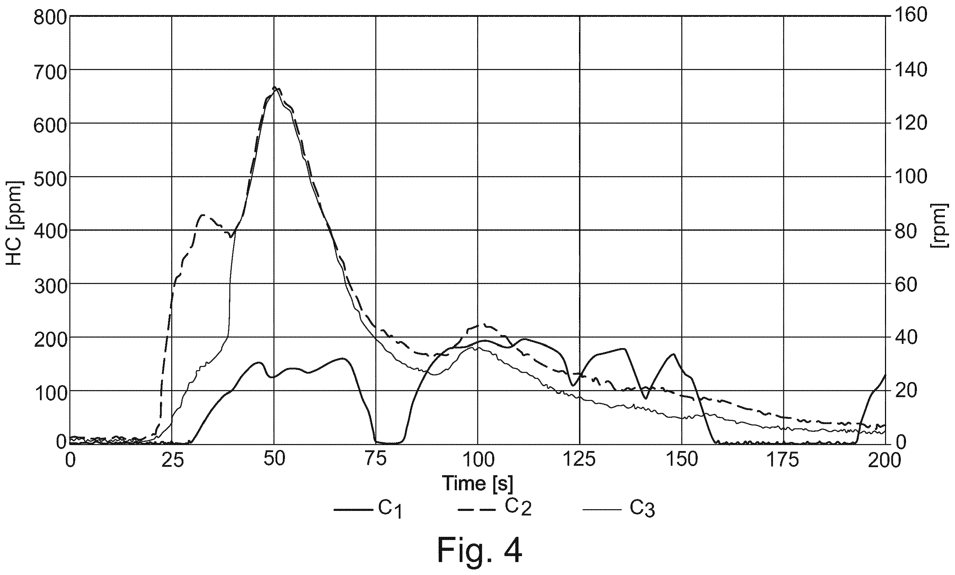

To appreciate the benefits of the present invention, reference will now be made to Figures 4 to 5 which show the hydrocarbon emissions generated by an engine in two tests conducted according to the WMTC *(Worldwide Motorcycle Test Cycles)* standard. A test according to the WMTC standard provides detecting the emissions of the engine while it reproduces a predetermined speed profile in a given time interval (1200 seconds). In Figure 4, curve C1 reproduces the speed profile according to the WMTC standard in a time interval of 200 seconds. Curves C2 and C3 refer to two different tests. Curve C2 shows the emission trend in a normal operating condition (i.e. without the implementation of the invention method for the entire test), while curve C3 shows the emission trend during a test where the invention method is implemented for the first 33 seconds.

In particular, the two tests were performed on a 4-stroke engine, with a compression ratio of 12, a bore of 52 mm, a stroke of 58.7 mm for a total displacement of 124.7 cm³. The stoichiometric ratio of the mixture was kept at 1.

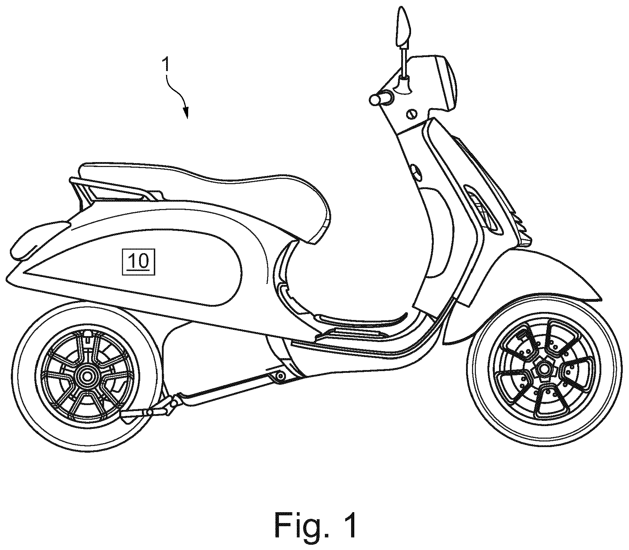

The tested engine was connected to an exhaust gas treatment assembly as shown in Figure 1, i.e. comprising a pre-catalyzer 25 and a main catalyzer 21 arranged in series along an exhaust line 20.

In the tests performed on the exhaust line 20, in the section between engine 10 and pre-catalyzer 25 and the section between pre-catalyzer 25 and main catalyzer 21, a diameter of 24 mm and a surface area of 4.53 cm² were provided. In the test in which the method was activated according to the invention, a no-load cycle was implemented in step A) while 15 standard cycles were implemented in step B).

The emissions were measured downstream of the main catalyzer 21 or at the outlet section of the exhaust gas line.

An initial test (as per WMTC procedure) was thus performed under standard operating conditions, i.e. without the implementation of no-load cycles. Curve C2 was derived from this test. After the engine 10 cooled down, a second test (according to the WMTC procedure) by implementing the method according to the invention (step A, B and C) was performed for a time of 33 seconds from engine ignition. From the comparison between the curves C2 and C3, it is apparent that the strong reduction of hydrocarbon emissions (indicated by the abbreviation HC) just in the first 33 seconds in which the exhaust partialization was activated. The two curves C2 and C3 under examination substantially show the same trend after 200 seconds from ignition by effect of the complete heating of the main catalyzer 21.

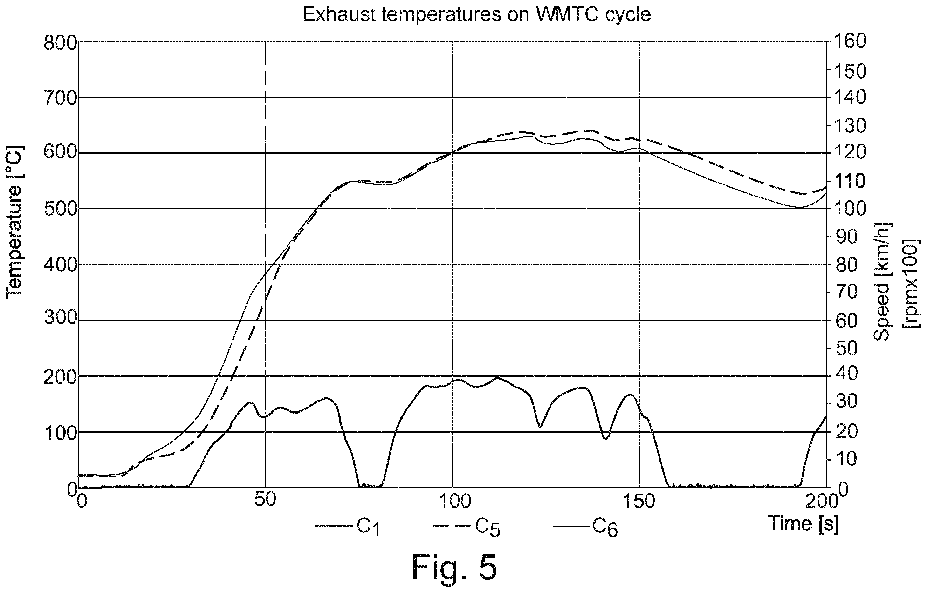

The graph in Figure 5 shows a further advantage of implementing the method according to the invention. Curve C5 shows the temperature trend at the center of the pre-catalyzer 21 in the first 200 seconds during the execution of the first test described above (absence of no-load cycles-standard cycles only). Curve C6 instead shows the temperature trend at the center of the pre-catalyzer 21 during the execution of the second test (standard cycles only). From the comparison of curves C5 and C6, it can be observed that the implementation of the method according to the invention advantageously determines a temperature increase in the center of the pre-catalyzer in its initial step.

## Claims

1. A method for controlling a heat engine of a saddle-ride type vehicle (1), wherein said heat engine (10) comprises a single chamber (5) for the combustion of a mixture generated by the injection of fuel into an oxidizer flow, wherein said vehicle comprises:
- an assembly (15) for the treatment of the exhaust gases generated in said chamber (5), wherein said unit (15) includes at least one catalyzer (21, 25) communicating with said chamber (5);
- injection means (47) for injecting said fuel into an oxidizing air flow;
- a control unit (ECU) configured to control said injection means (47),
wherein said method is adapted to be executed by said control unit (ECU) and comprises the steps of:
A) interrupting the injection of fuel for at least one cycle of said heat engine such that said heat engine (10) does not develop power and pumps oxidizing air directly to the exhaust and thus directly into the catalyzer (21,25) provided downstream an engine exhaust section;
B) activating the injection of fuel for a predetermined number (n) of cycles of said engine (10) after said at least one cycle;
C) repeating steps A) and B) until the value of the temperature of said at least one catalyzer increases to reach a predetermined value.

2. The control method according to claim 1, wherein said predetermined number (n) of cycles is a multiple of 8.

3. The control method according to claim 1 or 2, wherein said method also comprises the step of detecting the actual temperature of said at least one catalyzer (21, 25) and wherein step C) is repeated until the actual value of the temperature of said at least one catalyzer (21, 25) reaches said predetermined value.

4. The control method according to claim 1, wherein step C) is repeated for a predetermined time interval, at the end of which the expected value of the temperature of said at least one catalyzer (21, 25) reaches said predetermined value, wherein the duration of said predetermined interval is determined on the basis of a predictive model.

5. The control method according to any one of claims 1 to 4, wherein during the execution of step B), said method includes adjusting the amount of fuel to be injected in the cycles of said number (n) immediately following the step A) so as to restore the correct carburation in each cycle performed in the step B).

## Patentansprüche

1. Verfahren zur Steuerung einer Wärmekraftmaschine eines Sattel-Fahrzeugs (1), wobei die Wärmekraftmaschine (10) eine einzelne Kammer (5) zur Verbrennung einer Mischung umfasst, die durch die Einspritzung von Kraftstoff in einen Oxidationsmittelstrom erzeugt wird, wobei das Fahrzeug umfasst:
- eine Anordnung (15) für die Behandlung der in der Kammer (5) erzeugten Abgase, wobei die Einheit (15) mindestens einen Katalysator (21, 25) umfasst, der mit der Kammer (5) in Verbindung steht;
- Einspritzmittel (47) zum Einspritzen des Kraftstoffs in einen oxidierenden Luftstrom;
- eine Steuereinheit (ECU), die zum Steuern der Einspritzmittel (47) konfiguriert ist,
wobei das Verfahren dazu ausgelegt ist, von der Steuereinheit (ECU) ausgeführt zu werden und folgende Schritte umfasst:
A) Unterbrechen der Einspritzung von Kraftstoff für mindestens einen Arbeitstakt der Wärmekraftmaschine, so dass die Wärmekraftmaschine (10) keine Leistung entwickelt und oxidierende Luft direkt zum Auspuff und somit direkt in den Katalysator (21, 25) pumpt, der stromabwärts eines Maschinenauspuffabschnitts vorgesehen ist;
B) Aktivieren der Einspritzung von Kraftstoff für eine vorbestimmte Anzahl (n) von Arbeitstakten der Maschine (10) nach dem mindestens einen Arbeitstakt;
C) Wiederholen der Schritte A) und B), bis der Wert der Temperatur des mindestens einen Katalysators zunimmt, um einen vorbestimmten Wert zu erreichen.

2. Steuerverfahren nach Anspruch 1, wobei die vorbestimmte Anzahl (n) von Arbeitstakten ein Vielfaches von 8 ist.

3. Steuerverfahren nach Anspruch 1 oder 2, wobei das Verfahren auch den Schritt des Erfassens der tatsächlichen Temperatur des mindestens einen Katalysators (21, 25) umfasst und wobei Schritt C) wiederholt wird, bis der tatsächliche Wert der Temperatur des mindestens einen Katalysators (21, 25) den vorbestimmten Wert erreicht.

4. Steuerverfahren nach Anspruch 1, wobei Schritt C) für ein vorbestimmtes Zeitintervall wiederholt wird, an dessen Ende der erwartete Wert der Temperatur des mindestens einen Katalysators (21, 25) den vorbestimmten Wert erreicht, wobei die Dauer des vorbestimmten Intervalls auf der Grundlage eines Vorhersagemodells bestimmt wird.

5. Steuerverfahren nach einem der Ansprüche 1 bis 4, wobei das Verfahren während der Ausführung von Schritt B) das Anpassen der Kraftstoffmenge umfasst, die in den Arbeitstakten der Anzahl (n) unmittelbar nach Schritt A) einzuspritzen ist, um so die richtige Gemischbildung in jedem in Schritt B) ausgeführten Arbeitstakt wiederherzustellen.

## Revendications

1. Procédé de commande d'un moteur thermique d'un véhicule du type à chevauchement (1), dans lequel ledit moteur thermique (10) comprend une chambre unique (5) pour la combustion d'un mélange généré par l'injection de carburant dans un flux d'oxydant, dans lequel ledit véhicule comprend :
- un ensemble (15) pour le traitement des gaz d'échappement générés dans ladite chambre (5), dans lequel ladite unité (15) comprend au moins un catalyseur (21, 25) communiquant avec ladite chambre (5) ;
- des moyens d'injection (47) pour injecter ledit carburant dans un flux d'air oxydant ;
- une unité de commande (ECU) configurée pour commander lesdits moyens d'injection (47),
dans lequel ledit procédé est adapté pour être exécuté par ladite unité de commande (ECU) et comprend les étapes consistant à :
A) interrompre l'injection de carburant pendant au moins un cycle dudit moteur thermique de sorte que ledit moteur thermique (10) ne développe pas de puissance et pompe de l'air oxydant directement vers l'échappement et donc directement dans le catalyseur (21, 25) prévu en aval d'une section d'échappement de moteur ;
B) activer l'injection de carburant pour un nombre prédéterminé (n) de cycles dudit moteur (10) après ledit au moins un cycle ;
C) répéter les étapes A) et B) jusqu'à ce que la valeur de la température dudit au moins un catalyseur augmente pour atteindre une valeur prédéterminée.

2. Procédé de commande selon la revendication 1, dans lequel ledit nombre prédéterminé (n) de cycles est un multiple de 8.

3. Procédé de commande selon la revendication 1 ou 2, dans lequel ledit procédé comprend également l'étape consistant à détecter la température réelle dudit au moins un catalyseur (21, 25) et dans lequel l'étape C) est répétée jusqu'à ce que la valeur réelle de la température dudit au moins un catalyseur (21, 25) atteigne ladite valeur prédéterminée.

4. Procédé de commande selon la revendication 1, dans lequel l'étape C) est répétée pendant un intervalle de temps prédéterminé, à la fin duquel la valeur attendue de la température dudit au moins un catalyseur (21, 25) atteint ladite valeur prédéterminée, dans lequel la durée dudit intervalle prédéterminé est déterminée sur la base d'un modèle prédictif.

5. Procédé de commande selon l'une quelconque des revendications 1 à 4, dans lequel pendant l'exécution de l'étape B), ledit procédé comprend l'ajustement de la quantité de carburant à injecter dans les cycles dudit nombre (n) immédiatement après l'étape A) de manière à restaurer la carburation correcte dans chaque cycle effectué à l'étape B).
